# EUROPÄISCHE PATENTSCHRIFT

(11) **EP 0 436 614 B1**
(45) Veröffentlichungstag und Bekanntmachung des Hinweises auf die Patenterteilung: **16.06.1993**
(21) Anmeldenummer: 89911039.9
(22) Anmeldetag: 26.09.1989
(51) Int. Cl.: A01L 3/00

(54) **KUNSTSTOFFHUFSCHUH FÜR PFERDE**
PLASTIC HORSESHOE
FER A CHEVAL EN MATIERE PLASTIQUE

(30) Priorität: 27.09.1988 DE 3832705
(43) Veröffentlichungstag der Anmeldung: 17.07.1991
(73) Patentinhaber: IGROW, Sergej, D-22309 Hamburg (DE)
(72) Erfinder: IGROW, Sergej, D-22309 Hamburg (DE)
(74) Vertreter: Schirmer, Siegfried, Dipl.-Ing.
(86) Internationale Anmeldenummer: EP8901119
(87) Internationale Veröffentlichungsnummer: WO9003110

(56) Entgegenhaltungen:
- EP-A- 233 335
- DE-A- 2 427 119
- DE-C- 3 721 856
- US-A- 3 917 000
- US-A- 3 921 721

## Beschreibung

Die Erfindung betrifft einen Kunststoffhufschuh der im Oberbegriff des Anspruch 1 genannten Art.

Derartige Hufschuhe sind aus dem Stand der Technik bekannt. Der Huf steht bei diesen Konstruktionen auf der Sohle des Kunststoffhufschuhes, die mit der Wand auf der Außenfläche des Hufes flächig befestigt ist, was in der Regel durch Verkleben geschieht.

Vorteilhaft bei dieser Bauweise ist das Vermeiden des für den Huf schädlichen Nagelns und die Elastizität der Konstruktion, die die physiologisch notwendigen Eigenbewegungen des Hufes beim Laufen zuläßt.

Nachteilig bei den bekannten Konstruktionen ist das schwierige und bisher nur ansatzweise gelöste Problem der billigen Massenfertigung von Kunststoffhufschuhen für Hufe, die naturgemäß stark unterschiedliche Formgebung insbesondere hindsichtlich der Umfangsform der Sohle aufweisen. Es ist bekannt, Kunststoffhufschuhe individuell angepaßt in der Fabrik zu fertigen. Dies ist aber äußerst aufwendig.

Ferner sind Konstruktionen bekannt, bei denen die Hufschuhe in Standardgrößen gefertigt und vor Ort dem individuellen Huf angepaßt werden. Zu diesem Zweck ist es beispielsweise bekannt, die Hufschuhe zweiteilig auszubilden und vor Ort nach Zuschneiden der Sohlen zusammenzufügen. Auch dies ist sehr arbeitsaufwendig und erfordert Geschick.

Weitere Nachteil beim Stand der Technik bestehen in der Verbindung des Wandteiles mit der Hufaußenfläche. Nach dem Stand der Technik werden elastische Laschen verklebt, wozu sie zumindest über die Abbindezeit des Klebers angedrückt gehalten werden müssen. Auch dies führt zu Problemen bei der Anbringung.

Aus der US-A-3 921 721 ist es bekannt, Sohle und Wand eines Hufschuhes mittels thermoplastischem Kleber mit dem Huf unter Wärmeeinwirkung zu verkleben. Dazu sind in aufwendiger Bauweise Heizdrähte in den Hufschuh integriert.

Aufgabe der vorliegenden Erfindung ist es daher, einen kostengünstigen Hufschuh zu schaffen, der einfacher anbringbar ist.

Diese Aufgabe wird erfindungsgemäß mit den Merkmalen des Kennzeichnungsteiles des Anspruchs 1 gelöst.

Schrumffähige Kunststoffe sind aus anderen Gebieten der Technik bekannt (zum Beispiel Schrumpfschläuche, Schrumpfmuffen etc.) und sind auch von der Festigkeit und insbesondere Abriebfestigkeit her für die vorliegenden Zwecke geeignet. Eine Anwendung auf dem vorliegenden Gebiet schafft erhebliche Vorteile. Ist die Wand aus schrumpffähigem Kunststoff gefertigt, so kann sie unmittelbar am Huf durch Wärmeeinwirkung an den Huf geschrumpft werden und legt sich diesem derart fest und in Oberflächenunebenheiten des Hufes engreifend an, daß unter Umständen sogar auf Verklebung verzichtet werden kann. Das Anschrumpfen geht sehr rasch. Sofort anschließend kann durch Abkühlen Endfestigkeit erreicht werden, so daß auch bei nervösen Pferden, die nicht lange stillhalten, bessere Ergebnisse erzielbar sind als mit dem bekannten ankleben von Laschen. Dabei kann die Sohle aus anderen Materialien bestehen, die auf bekannte Weise individuell dem Huf angeformt werden. Ist die Sohle schrumpffähig ausgestaltet, so kann sie in Übergröße angefertigt auf den Hufumriß zurechtgeschrumpft werden. Auch aus einem Untermaß heraus kann sie schrumpfgeweitet werden. Beide Teile können schrumpffähig ausgestaltet sein. Dann kann beispielsweise zunächst die Sohle auf das erforderliche Maß individuell angepaßt zurechtgeschrumpft werden und anschließend wird die Wand an die Huffläche geschrumpft. Die erforderlichen Werkzeuge (Flamme oder Heißluftpistole) sind einfach verfügbar und bedienbar. Eine solche schrumpfbare sohle kann auch ohne schrumpfbare Wand verwendet werden, beispielsweise mittels üblicher Klebelaschen am Huf befestigt werden.Es ergibt sich insgesamt eine Konstruktion, die eine sehr exakte Schuhanpassung an den Huf ergibt, was wichtig für die Abreißfestigkeit ist und die bei geringen Herstellungskosten einfache Anbringbarkeit gewährleistet.

Dabei sind vorteilhaft die Merkmale des Anspruches 2 vorgesehen. Der Heißkleber wird beim Schrumpfvorgang erwärmt, so daß sich in einem Arbeitsgang eine exakte Druckanpassung und Verklebung ergibt.

Weiterhin vorteilhaft sind die Merkmale des Anspruches 3 vorgesehen. Insbesondere kann das Anschrumpfen an die Sohle in einer Vorstufe des Anbringungsverfahrens, beispielsweise in der Fabrik, erfolgen. Gesonderte Befestigungsmittel für die Befestigung der Wand an der Sohle werden eingespart.

Weiterhin vorteilhaft sind die Merkmale des Anspruches 4 vorgesehen. Hierbei kann die gesamte Konstruktion aus einem Material kostensparend hergestellt werden. Nach der für den Schrumpfprozeß erforderlichen Vorbehandlungen in der Fabrik wird der Schuh am Huf individuell angepaßt durch Zurechtschrumpfen der Sohle auf die erforderliche Umfangsform und durch Anschrumpfen der Wand an die Hufaußenfläche.

Weiterhin vorteilhaft sind die Merkmale des Anspruches 5 vorgesehen. Der Querriegel ist bekannt zur Erhöhung der Festigkeit der Sohle, insbesondere zwischen den hinteren Enden. Er kann bei schrumpffähiger Ausbildung die exakte Formeinstellung der Sohle erleichtern.

Weiterhin vorteilhaft sind die Merkmale des Anspruches 6 vorgesehen. Eine solche die Sohlenfläche überspannende Deckwand kann auch aus anderen, zum Beispiel hufhygienischen oder schmutzabweisenden Gründen erforderlich sein und kann vorteilhaft auch zum Schrumpfen verwendet werden.

Weiterhin vorteilhaft sind die Merkmale des Anspruches 7 vorgesehen. Bei dieser Kosntruktion braucht die Sohle nur teilweise an den schrumpffähigen Stücken erwärmt zu werden. Dabei kann das Pferd bereits auf der Sohle stehen, wobei die nicht schrumpfbaren und nicht zu erwärmenden Sohlenteile ausreichende Festigkeit gewährleisten.

Dabei sind vorteilhaft die Merkmale des Anspruches 8 vorgesehen. Die schrumpfbaren Stücke haben hierbei geringen Querschnitt und lassen sich schneller durch und durch erwärmen und somit zum Schrumpfen bringen.

In den Zeichnungen ist die Erfindung beispielsweise und schematisch dargestellt. Es zeigen;
- Figur 1:: eine Draufsicht auf einen Kunstoffhufschuh mit schrumpfbarer Wand,
- Figur 2:: einen Schnitt nach Linie 2 - 2 in Figur 1 mit Huf,
- Figuren 2a bis 2c:: Ausschnitte aus Figur 2 mit Darstellungen von Varianten,
- Figur 3:: eine Draufsicht gemäß Figur 1 auf eine schrumpfbare Sohle,
- Figuren 4a und 4b:: die Darstellung einer Variante zu Figur 3 in geschrumpfter und ungeschrumpfter Darstellung,
- Figuren 5a und 5b:: eine Draufsicht gemäß Figru 3 auf eine Sohle mit Querriegel in ungeschrumpfter und geschrumpfter Form,
- Figur 6a:: eine Draufsicht auf eine schrumpfbare Sohle mit Deckwand und
- Figur 6b:: einen Schnitt nach Linie 6b - 6b in Figur 6a.

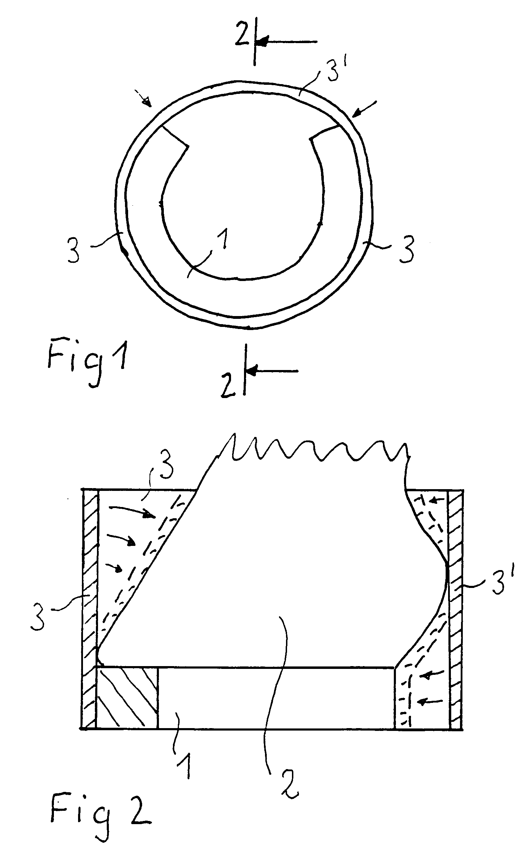

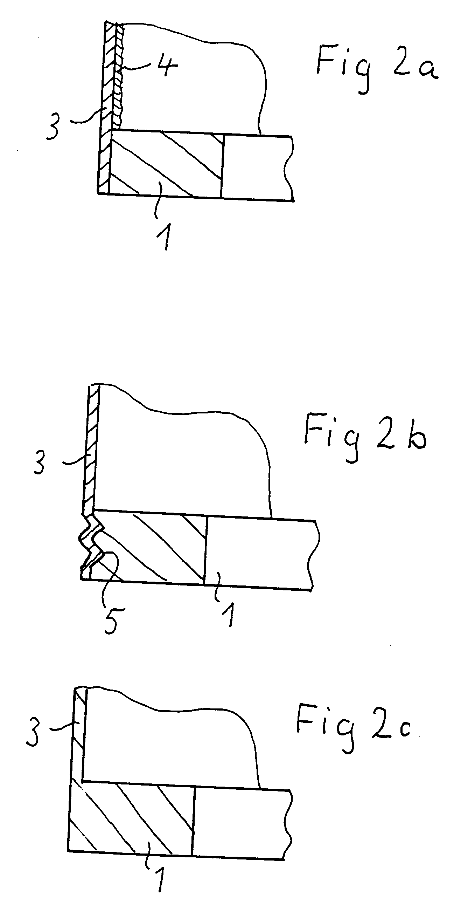

Figur 1 und 2 zeigen eine erste Ausführungsform eines erfindungsgemäßen Kunststoffschuhes mit einer hufeisenförmig ausgebildeten Sohle 1, die in Figur 1 in Draufsicht und in Figur 2 im Schnitt dargestellt ist. Diese Sohle ist im Umfang genau der Umfangsform eines Hufes, also des unteren Randes der Hufaußenfläche 2 anzupassen, wie dies Figur 2 zeigt. Auf der Außenseite der Sohle 1 ist eine Wand 3 befestigt, die zunächst zylindrisch nach oben steht.

Die Wand 3 besteht aus schrumpffähigem Material, ist also als Schrumpfschlauch ausgebildet, und zwar derart, daß sie sich bei Erwärmung im Umfang zusammenzieht. Steht, wie Figur 2 zeigt, der Huf passend auf der Sohle, so kann die Wand 3 erwärmt werden, beispielsweise durch Abwedeln von außen mit einer Flamme oder durch Anblasen mit einem Heißlufgebläse. Sie zieht sich dann zusammen, wie in Figur 2 mit Pfeilen dargestellt, und legt sich allseitig an den Huf, und zwar insbesondere auf dessen Hufaußenfläche 2 in der in Figur 2 gestrichelt dargestellte Position. Der hintere Abschnitt 3' der Wand 3 wird anschließend nicht mehr benötigt und kann bei den in Figur 1 darsgestellten Pfeilen abgeschnitten werden. Beim Aufschrumpfen der Wand ist dieser hintere Abschnitt 3' vorteilhaft aber noch vorhanden und sichert das zentrierte Anlegen unter ausreichend hohem Druck.

Die Wand 3 wird beim Schrumpfen derart fest auf den Huf gepreßt und in dessen Unebenheiten verzahnt, daß unter Umständen auf diese Weise bereits ausreichender Halt vorhanden ist. Vorteilhaft kann aber, wie Figur 2a zeigt, auf der Innenseite der Wand 3 eine Schicht 4 eines Heißklebers vorgesehen sein, der beim Aufschrumpfen von der beim Schrumpfprozeß zugeführten Wärme aufgeschmolzen wird und unter Schrumpfpreßkraft eine feste Klebeverbindung mit der Schrumpfaußenfläche 2 ergibt. Im hinteren Bereich 3' der Wand kann die Klebebeschichtung 4 weggelassen sein.

Die Befestigung der Wand 3 an der Sohle 1 kann auf unterschiedliche Weise vorgenommen sein, beispielsweise durch Verklebung, Verschraubung oder durch Verguß. Wie Figur 2b zeigt, kann die Wand 3 auf die Sohle 1 auch aufgeschrumpft sein, wobei vorteilhaft die Umfangsseite der Sohle die dargestellten Rillen 5 aufweist oder sonstige Vorsprünge, in die die Wand 3 verzahnend einschrumpfen kann.

Wie Figur 2c zeigt, können Wand 3 und Sohle 1 auch einstückig ausgebildet sein. Beide Teile können schrumpffähig sein oder, wie zuvor beschrieben, nur die Wand 3, während die Sohle 1 zwar aus demselben Material besteht, aufgrund entsprechender Vorbehandlung aber nicht schrumpffähig ist. Bei dieser Ausführungsform ergibt sich eine besonders einfache Herstellung.

Besonders vorteilhaft sind beide Teile schrumpffähig ausgebildet. Beispielsweise kann auch die Ausbildungsform der Figuren 1 und 2 eine schrumpffähige Sohle 1 aufweisen. Auf diese Weise wird nicht nur die Anbringung des Hufschuhes am Huf mittels Schrumpfen der Wand 3 vereinfacht, sondern es wird auch die individuelle Anpassung der Sohle an die Umfangsform des Hufes vereinfacht, nämlich durch Schrumpfaufweitung bzw. Schrumpfzusammenziehung der Sohle aus einer serienmäßig hergestellten Standardform mit Untermaß bzw. Übermaß.

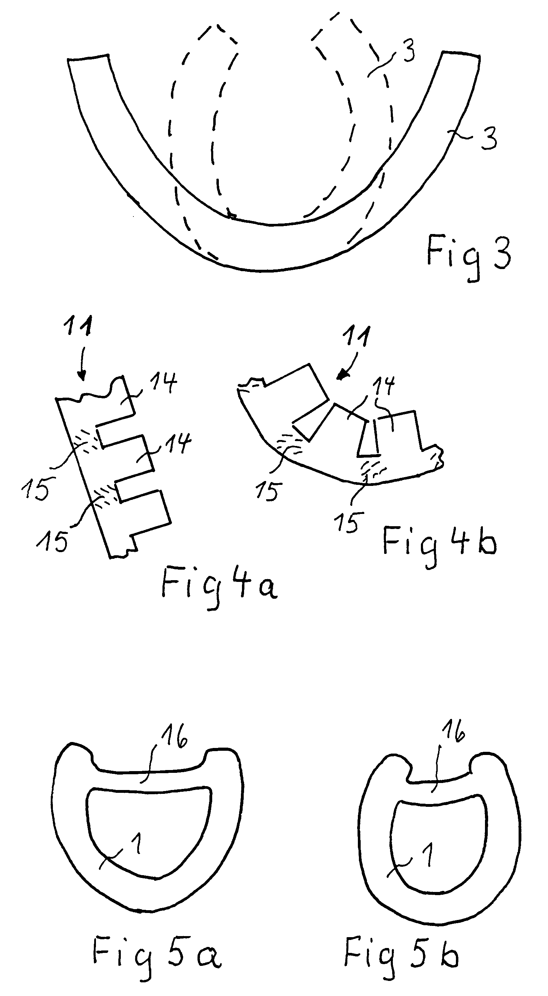

Besitzt die Sohle Übermaß, so kann sie, wie Figur 3, bei der nur die Sohle dargestellt ist, aus dem in ausgezogenen Linien dargestellten Übermaß durch Schrumpfen auf die gestrichelt dargestellte exakte Hufform gebracht werden. Dies kann beispielsweise dadurch geschehen, daß, wie Figur 2 zeigt, die Sohle im vorderen Bereich (links in Figur 2) dem Pferd angelegt wird und sodann die Sohle rundrum erwärmt wird, so daß sie überall sweit zusammenschrumpft, bis die Wand 3 an der Sohle anliegt. Dabei wird vorteilhaft die Wand 3 noch nicht erwärmt, die erst später, wenn die Sohle paßt, angeschrumpft wird, wie oben beschrieben.

Eine schrumpfbare Sohle kann auch auf andere Weise als mittels zuvor beschriebenen schrumpfbaren Wand 3 am Huf befestigt werden, beispielsweise mittels der aus dem Stand der Technik üblichen verklebbaren Laschen, die dann aus anderem geeignetem Kunststoffmaterial bestehen können.

In Figur 4a ist eine schrumpfbare Sohle 11 dargestellt, die breite Stücke 14 und schmale Stücke 15 aufweist, insgesamt in Draufsicht also etwa kammförmig aussieht. Die Sohle 11 ist derart hergestellt, daß die schmalen Teile 15 schrumpfförmig sind, die breiten Teile 14 aber nicht. Wird diese Sohle nun erwärmt, so schrumpft sie in die aus Figur 4b ersichtliche Form, kann sich also entsprechend der Darstellung der Figur 3 durch Umfangsverkleinerung der Hufform anpassen. Natürlich ist auch eine Herstellung mit Umfangsuntermaß möglich, bei der durch Schrumpfen der Umfang vergrößert wird und auf diese Weise die Hufform angepaßt wird.

Vorteilhaft bei der Ausbildung der Figuren 4a und 4b ist die geringe Masse der schrumpffähigen Stücke 15, die rasch erwärmbar sind, während die massereicheren Stücke 14 kalt und somit formstabil bleiben. Das Pferd kann bereits auf dieser Sohle stehen, während sie exakt angeschrumpft wird.

In vereinfachter Ausführungsform kann auch eine gleich breite Sohle, wie sie in Figur 3 dargestellt ist, schrumpffähige und nichtschrumpffähige Stücke aufweisen und entsprechend stückweise geschrumpft sein. Die Vorteile sind im wesentlichen dieselben wie bei der Ausführungsform der Figuren 4a und 4b.

Figur 5a zeigt eine Sohle, die im wesentlichen der Figur 3 entspricht, nahe der hinteren Enden aber einen Querriegel 16 aufweist, der aus dem Stand der Technik bekannt ist und beispielsweise aus Gründen der besseren Formfestigkeit der Sohle gern verwendet wird. Wird auch dieser Riegel 16 ist aus schrumpffähigem Material hergestellt, so schrumpft er, wie Figur 5b zeigt und kann auf diese Weise zur exakten Einstellung der hinteren Breite des Hufes nützlich sein.

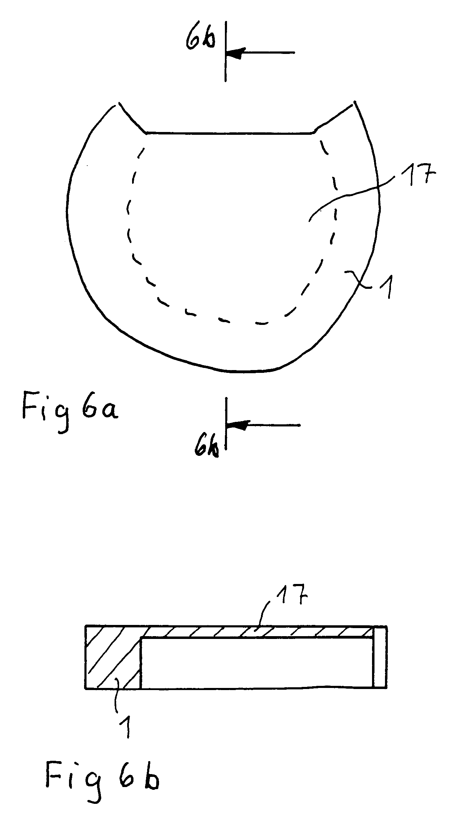

Eine weitere Variante ist in Figuren 6a und 6b dargestellt. Hier ist die Sohle in ihrem oberen Bereich geschlossen mit einer Deckwand 17 ausgebildet, die ebenfalls aus schrumpffähigem Material bestehlt. Durch beispielsweise partielles Erwärmen der Deckwand 17 kann das Schrumpfen der Sohle 1 auf die exakte Umfangsform genau gesteuert werden. Die Deckwand, deren Konstruktion an sich bekannt ist, kann auch für andere Zwecke vorteilhaft sein, wie beispielsweise zum Abdecken der Unterseite des Hufes gegen eindringenden Schmutz oder dergleichen.

## Patentansprüche

1. Kunststoffhufschuh für Pferde, der im Zusammenhang mit seiner Befestigung am Huf einer Wärmeeinwirkung ausgesetzt wird, mit einer im wesentlichen hufeisenförmig ausgebildeten Sohle (1, 11), die unter dem Hufrand anzuordnen ist und einer an der Sohle (1, 11) befestigten, von deren äußerem Rand aufragenden Wand (3) zur flächigen Verbindung mit der konischen Hufaußenfläche (2), dadurch gekennzeichnet, daß die Sohle (1,11) und/oder die Wand (3) aus bei Wärmeeinwirkung schrumpfbarem Material ausgebildet sind.

2. Kunststoffhufschuh nach Anspruch 1, dadurch gekennzeichnet, daß die schrumpfbare Wand (3) auf der Innenseite mit bei Schrumpftemperatur erweichendem Heißkleber (4) beschichtet ist.

3. Kunststoffhufschuh nach einem der vorhergehendem Ansprüche, dadurch gekennzeichnet, daß die schrumpfbare Wand (3) auf die mit Vorsprüngen (5) versehene Umfangsseite der Sohle (1) aufgeschrumpft ist.

4. Kunststoffhufschuh nach einem der Ansprüche 1 oder 2, dadurch gekennzeichnet, daß beide Teile (1, 3) einstükkig schrumpfbar ausgebildet sind (Figur 2c).

5. Kunststoffhufschuh nach einem der vorhergehenden Ansprüche, dadurch gekennzeichnet, daß die schrumpfbare Sohle (1) nahe der hinteren Enden einen schrumpfbaren Querriegel (16) aufweist.

6. Kunststoffhufschuh nach einem der vorhergehenden Ansprüche, dadurch gekennzeichnet, daß die schrumpfbare Sohle (1) eine die Sohle überdeckende schrumpfbare Deckwand (17) aufweist.

7. Kunststoffhufschuh nach einem der vorhergehenden Ansprüche, dadurch gekennzeichnet, daß die Sohle (11) in Umfangsrichtung abwechselnd schrumpfbare und nicht schrumpfbare Stücke (15, 14) aufweist.

8. Kunststoffhufschuh nach Anspruch 7, dadurch gekennzeichnet, daß die schrumpfbaren Stücke (15) schmaler ausgebildet sind als die nicht schrumpfbaren Stücke (14).

## Claims

1. Synthetic material horseshoe for horses, which in connection with its fastening at the hoof is exposed to a thermal influence and has a sole (1, 11), which is formed substantially in horseshoe shape and to be arranged under the rim of the hoof, and a wall (3), which is fastened at the sole (1, 11) and projects up from the outer rim thereof, for the areal connection with the conical outward hoof surface (2), characterised thereby, that the sole (1, 11) and/or the wall (3) are constructed of material shrinkable under thermal influence.

2. Synthetic material horseshoe according to claim 1, characterised thereby, that the shrinkable wall (3) is coated on the inward side with a hot-setting adhesive substance (4) softening at the shrinking temperature.

3. Synthetic material horseshoe according to one of the preceding claims, characterised thereby, that the shrinkable wall (3) is shrunk onto the circumferential side, which is provided with projections, of the sole (1).

4. Synthetic material horseshoe according to one of the claims 1 and 2, characterised thereby, that both the parts (1, 3) are constructed in one shrinkable piece (Figure 2c).

5. Synthetic material horseshoe according to one of the preceding claims, characterised thereby, that the shrinkable sole (1) comprises a shrinkable crossbar (16) near the rear ends.

6. Synthetic material horseshoe according to one of the preceding claims, characterised thereby, that the shrinkable sole (1) comprises a shrinkable covering wall (17) covering the sole.

7. Synthetic material horseshoe according to one of the preceding claims, characterised thereby, that the sole (11) comprises shrinkable and not shrinkable pieces (15, 14) alternating in circumferential direction.

8. Synthetic material horseshoe according to claim 7, characterised thereby, that the shrinkable pieces (15) are constructed to be narrower than the not shrinkable pieces (14).

## Revendications

1. Chaussure en matière plastique pour sabots de chevaux, qui est soumise en corrélation avec sa fixation sur le sabot à une action thermique, chaussure avec une semelle (1, 11) épousant sensiblement la forme du fer à cheval, semelle qu'on doit disposer sous le bord du sabot et avec une paroi (3), fixée à la semelle (1, 11) saillant vers le haut à partir du bord extérieur de la semelle pour être reliée à plat avec la surface extérieure conique du sabot (2), chaussure en matière plastique pour sabot de cheval caractérisée en ce que la semelle (1, 11) et/ou la paroi (3) sont en une matière rétractable sous l'action de la chaleur.

2. Chaussure en matière plastique pour sabots de chevaux selon la revendication 1, caractérisée en ce que la paroi rétractable (3) est enduite sur la face intérieure avec une colle à chaud (4) se ramollissant à la température de rétreint.

3. Chaussure en matière plastique pour sabots de chevaux selon l'une des revendications précédentes, caractérisée en ce que la paroi rétractable (3) est rétreinte sur le pourtour de la semelle (1) pourvu de saillies (5).

4. Chaussure en matière plastique pour sabots de chevaux selon l'une des revendications 1 ou 2, caractérisée en ce que les deux parties (1, 3) sont formées d'une seule pièce en étant rétractables (figure 2c).

5. Chaussure en matière plastique pour sabots de chevaux selon l'une des revendications précédentes, caractérisée en ce que la semelle rétractable (1) présente à proximité des extrémités postérieures une entretoise transversale (16) rétractable.

6. Chaussure en matière plastique pour sabots de chevaux selon l'une des revendications précédentes, caractérisée en ce que la semelle rétractable (1) présente une paroi de recouvrement (17) rétractable recouvrant la semelle.

7. Chaussure en matière plastique pour sabots de chevaux selon l'une des revendications précédentes, caractérisée en ce que la semelle (11) présente des pièces (15, 14) alternativement rétractables et non rétractables dans le sens périphérique.

8. Chaussure en matière plastique selon la revendication 7, caractérisée en ce que les pièces rétractables (15) sont constituées de façon plus mince que les pièces non rétractables (14).
